# EUROPÄISCHE PATENTSCHRIFT

(11) **EP 2 821 599 B1**
(45) Veröffentlichungstag und Bekanntmachung des Hinweises auf die Patenterteilung: **27.04.2016**
(21) Anmeldenummer: 14175254.3
(22) Anmeldetag: 01.07.2014
(51) Int. Cl.: F01D 25/18, F02C 7/06

(54) **Strahltriebwerk mit wenigstens einem Ölabscheider**
Jet engine with at least one oil separator
Moteur à réaction doté d'au moins un séparateur d'huile

(30) Priorität: 01.07.2013 DE 102013106879
(43) Veröffentlichungstag der Anmeldung: 07.01.2015
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Kronthaler, Wolfgang N.K.

(56) Entgegenhaltungen:
- EP-A2- 2 592 252
- DE-A1-102006 058 343
- DE-T2- 69 605 014
- FR-A1- 2 961 856
- US-A1- 2009 133 961
- US-A1- 2009 183 950
- US-A1- 2011 314 830

## Beschreibung

Die Erfindung betrifft ein Strahltriebwerk mit wenigstens einem Ölabscheider gemäß der im Oberbegriff des Patentanspruches 1 näher definierten Art.

Bei aus der Praxis bekannten Strahltriebwerken wird im Betrieb ölhaltige Verbrauchsluft aus Lagerkammern und aus einem Öltank über separate Leitungen einem Ölabscheider bzw. einem sogenannten Breather zugeführt, der als Zentrifugalölabscheider ausgeführt sein kann. Die Separierung großer Ölpartikel aus der Verbrauchsluft bzw. den Luft-Öl-Volumenströmen aus den Lagerkammern und dem Öltank erfolgt über einen im Bereich des Breathers vorgesehenen und als Zentrifuge wirkenden Umlenkbereich. Ölpartikel mit kleineren Durchmessern werden durch einen im Ölabscheider angeordneten Metallschaum aufgefangen und so ebenfalls aus der Luft gefiltert. Das durch diese Abscheidung abgeschiedene Öl wird dem Ölkreislauf wieder zugeführt. Die gereinigte Luft wird über Bord an die Umwelt abgegeben.

Die dem Breather bzw. dem Zentrifugalölabscheider zugeführten Luft-Öl-Volumenströme sind stark ölhaltig und hoch temperiert. Dadurch sind in den Luft-Öl-Volumenströmen auch sehr feine Ölpartikel. Diese werden aufgrund ihrer geringen Größe nur ungenügend mittels der Zentrifuge separiert und nur unzureichend durch den in der Zentrifuge befindlichen Metallschaum aufgefangen. Dadurch gelangen sie über einen Auslass des Ölabscheiders für den Luftstrom in die Umwelt. Diese Verluste begründen den durchschnittlichen Ölverbrauch heutiger Triebwerke. Weiterhin treten die im Bereich des Ölabscheiders nicht abscheidbaren Öltröpfchen in Form eines feinen Nebels aus dem Triebwerk aus, was einen hohen Ölverbrauch von Strahltriebwerken verursacht und aus Umweltgesichtspunkten ebenfalls unerwünscht ist.

Aus der DE 10 2006 058 343 A1 ist ein Gasturbinenölabscheider mit einem Gehäuse bekannt, das mit einem Einlass versehen ist. In dem Gehäuse ist ein in Rotation versetzbares Filterelement angeordnet, das mit einem Luftablass stromab des Filterelements versehen ist. Zusätzlich umfasst das Gehäuse zumindest einen Ölablass. Stromauf des Filterelements sind Mittel zur Aufbringung von elektrostatischen Kräften angeordnet, um die Neigung von Öltropfen, sich mit einem Ölfilm im Filterelement zu verbinden, zu erhöhen und eine Abscheideleistung im Bereich des Gasturbinenölabscheiders zu verbessern.

Nachteilhafterweise ist eine Temperatur eines in solche Gasturbinenölabscheider bzw. Breather eingeleiteten Luft-Öl-Volumenstromes unter Umständen sehr hoch, weshalb das aus dem Stand der Technik bekannte elektrostatische Aufladen eines Luft-Öl-Gemisches nur bedingt zur Verbesserung einer Abscheideleistung im Bereich eines Gasturbinenölabscheiders geeignet ist, da das im Luft-Öl-Volumenstrom gasförmig vorliegende Öl durch die bekannte Vorgehensweise nicht in gewünschtem Umfang aus dem Luft-Öl-Volumenstrom abscheidbar ist.

In der Druckschrift US 2009/0133961 A1 ist ein Luft-Öl-Abscheider für ein Gasturbinentriebwerk beschirieben, wobei der Luft-Öl-Abscheider in einer Getriebewelle, einer Niederdruckwelle oder anderen passenden rotierenden Komponenten integriert sein kann. Über den Luft-Öl-Abscheider ist Öl aus einem Luft-Öl-Gemisch eines Lagersumpfes abtrennbar. Im Lagersumpf befindet sich ein hinteres Lager. Dem Lagersumpf wird Öl über eine Leitung zugeführt. Um im Bereich des Lagersumpfes befindliches heißes Luft-Öl-Gemisch zu kühlen, wird in den Lagersumpf andererseits über eine Düse kühleres Öl eingesprüht und mit diesem vermischt. Hierbei vermischen sich Tropfen des kühleren Ölstroms mit dem wärmeren Luft-Öl-Gemisch im Sumpf, so dass das Luft-Öl-Gemisch relativ kühler wird.

Aus der Druckschrift US 2009/0183950 A1 ist ein Ölabscheider bekannt, dem über eine Leitung vom Motor Öl zugeführt wird, wobei der Ölstrom eine Beladung mit Luft aufweist. Im Bereich des Ölabscheiders wird aus dem Ölstrom Luft abgeschieden.

Ein Ölversorgungssystem für eine Gasturbine mit einem im Bereich eines Hilfsgerätegetriebes angeordneten Entlüfter ist aus der US.2011/0314830 A1 bekannt. Dem Entlüfter wird ein Luft-Öl-Volumenstrom von einem Abscheider zugeführt. Die Einleitung von Öl von dem Auslass in die Hilfsgerätegetriebeeinrichtung ist zur Schmierung eines Hohlraums vorgesehen.

In der Druckschrift FR 2 961 856 A1 ist eine Vorrichtung beschrieben, wobei einer Einrichtung Öl zugeführt wird, um über Entgasungsleitungen jeweils ein Luft-Öl-Gemisch aus den Lagerkammern abzusaugen.

Weiterhin ist aus der EP 2 592 252 A2 ein im Bereich einer Hilfsgerätegetriebeeinrichtung angeordneter Abscheider beschrieben.

Der vorliegenden Erfindung liegt daher die Aufgabe zugrunde, ein Strahltriebwerk mit wenigstens einem Ölabscheider zur Verfügung zu stellen, bei weichem auf konstruktiv einfache und kostengünstige Art und Weise ein Ölgehalt eines aus dem Strahltriebwerk an die Umgebung abgegebenen Luftvolumenstromes möglichst gering ist.

Erfindungsgemäß wird diese Aufgabe mit einem Strahltriebwerk mit den Merkmalen des Patentanspruches 1 gelöst.

Bei dem erfindungsgemäßen Strahltriebwerk mit wenigstens einem Ölabscheider bzw. Breather ist durch den Ölabscheider ein Luft-Öl-Volumenstrom aus mehreren mit Öl beaufschlagten Bereichen zum Abscheiden von Öl führbar. Zusätzlich ist eine Einrichtung zum Einsprühen von Öl in zumindest einen Luft-ÖI-Volumenstrom vorgesehen.

Erfindungsgemäß ist der Ölverlust auf kosten- und bauraumgünstige Art und Weise dadurch verringert, dass mehrere mit Öl beaufschlagte Bereiche mit dem Ölabscheider in Wirkverbindung stehen, wobei über die Einrichtung im Bereich jeder Verbindung zwischen einem mit Öl beaufschlagten Bereich und dem Ölabscheider und/oder stromab eines Vereinigungsbereichs zwischen wenigstens zwei Luft-Öl-Volumenströmen von zwei oder mehreren mit Öl beaufschlagten Bereichen Öl einsprühbar ist.

Über die Einrichtung wird vorzugsweise ein definierter Ölsprühstrahl direkt in den Luft-Öl-Volumenstrom eingebracht. Beim Aufeinandertreffen von eingesprühten Öltröpfchen auf bereits im Luft-Öl-Volumenstrom vorhandene Öltröpfchen vereinigen sich die eingesprühten Öltröpfen und die bereits vorhandenen Öltröpfchen aufgrund ihrer Anziehungskräfte zu gewünscht größeren Tropfen, die im weiteren Strömungsweg des Luft-Öl-Volumenstromes mit geringerem Aufwand als Ölpartikel mit kleinerem Durchmesser aus der Luft mechanisch abscheidbar sind. Anschließend besteht die Möglichkeit, die gereinigte Luft stromab des Ölabscheiders an die Umgebung des Strahltriebwerks oder einen Triebwerkkern- oder Bypassstrom auszuleiten, während das abgeschiedene Öl in einen Ölkreislauf des Strahltriebwerks zurückgeleitet wird.

Zusätzlich ist durch das Einsprühen von Öl in den Luft-Öl-Volumenstrom auch eine Temperatur des Luft-Öl-Volumenstromes bei entsprechender Temperaturdifferenz zwischen dem Öl und dem Luft-Öl-Volumenstrom reduzierbar. Bei entsprechender Abkühlung des Luft-Öl-Volumenstromes wird die gewünschte Vergrößerung der Ölpartikeldurchmesser im Luft-Öl-Volumenstrom zusätzlich begünstigt, da durch die Temperaturabsenkung im Luft-Öl-Volumenstrom gasförmiges Öl kondensiert und zu einem Anstieg der Tropfendurchmesser der im Bereich des Luft-Öl-Volumenstromes vorliegenden Ölpartikel führt.

Dadurch, dass im Bereich jeder Verbindung zwischen einem mit Öl beaufschlagten Bereich und dem Ölabscheider über die Einrichtung Öl einsprühbar ist, sind die jeweils eingesprühte Ölmenge und die beim Einsprühen erzeugte Tröpfchengröße an die jeweils vorliegende Beladung eines Luft-Öl-Volumenstromes eines mit Öl beaufschlagten Bereiches eines Strahltriebwerkes, beispielsweise auch auf dessen aktuelle Temperatur, führbar und die gewünschte Partikeldurchmessererhöhung jeweils an den aktuell vorliegenden Betriebspunkt angepasst in gewünschtem Umfang realisierbar.

Wird Öl zusätzlich hierzu oder alternativ dazu stromab eines Vereinigungsbereiches zwischen wenigstens zwei Luft-Öl-Volumenströmen von zwei oder mehreren mit Öl beaufschlagten Bereichen über die Einrichtung eingesprüht, ist die Abscheideleistung im Bereich des Ölabscheiders und/oder im Bereich des Umlenkbereiches und/oder im Bereich der optionalen Zentrifuge mit geringem Aufwand im erforderlichen Umfang verbesserbar.

Bei einer mit hoher Abscheideleistung im Bereich des Ölabscheiders betreibbaren Ausführungsform des Strahltriebwerks ist der Ölabscheider mit einem in Rotation versetzbaren porösen Bereich ausgeführt, der im Strömungsweg des Luft-Öl-Volumenstromes angeordnet ist und von Luft-Öl-Volumenstrom durchströmbar ist.

Die durch die Einrichtung bewirkte vorbeschriebene Vergrößerung der Tropfendurchmesser führt auch zu einer Verbesserung der Abscheideleistung im porösen Bereich des Ölabscheiders, in dem das im Luft-Öl-Volumenstrom vorhandene Öl einerseits wie im Bereich eines Prallfilters und andererseits wie im Bereich einer Zentrifuge aus dem Luft-Öl-Volumenstrom abgeschieden wird, wenn die Einrichtung stromauf des porösen Bereiches angeordnet ist. Die durch die Einrichtung erzielte sogenannte Auswaschung des Öls nunmehr vergrößerten Ölpartikel können im porösen Bereich, der vorzugsweise als Metallschaum oder dergleichen ausgeführt sein kann, mit geringem Aufwand effizienter separiert werden. Dadurch werden über die Abluft eines Strahltriebwerkes auftretende Ölverluste durch die verringerten Emissionen minimiert.

Bei einer konstruktiv einfachen Ausführungsform des erfindungsgemäßen Strahltriebwerkes ist vorzugsweise stromauf des porösen Bereiches des Ölabscheiders zumindest ein Umlenkbereich im Strömungsweg des Luft-Öl-Volumenstromes vorgesehen, in dessen Bereich zumindest ein Teil des Öls aus dem Luft-Öl-Volumenstrom aufgrund der wirkenden Zentrifugalkraft abscheidbar ist. Damit sind größere Ölpartikel bzw. Öltröpfchen aus dem Luft-Öl-Volumenstrom auch bereits vor Eintritt in den porösen Bereich des Ölabscheiders auf konstruktiv einfache Art und Weise abscheidbar und ein Strömungswiderstand im porösen Bereich des Ölabscheiders aufgrund einer zu hohen Beladung mit Öl auf ein definiertes Niveau begrenzbar.

Die Abscheideleistung ist bei einer Weiterbildung des erfindungsgemäßen Strahltriebwerkes dadurch verbesserbar, dass wiederum vorzugsweise stromauf des porösen Bereiches des Ölabscheiders zumindest eine Zentrifuge im Strömungsweg des Luft-Öl-Volumenstromes vorgesehen ist, in dessen Bereich zumindest ein Teil des Öls aus dem Luft-Öl-Volumenstrom aufgrund der wirkenden Zentrifugalkraft abscheidbar ist. Dabei ist der Abscheidegrad in Abhängigkeit der jeweils eingebrachten Energie im Bereich der Zentrifuge in gewünschtem Umfang einstellbar, beispielsweise in Abhängigkeit eines Grades der Beladung des Luft-Öl-Volumenstromes mit Öl.

Bei einer einfach, montierbaren Ausführungsform des Strahltriebwerkes ist der Umlenkbereich und/oder die Zentrifuge im Bereich des Ölabscheiders vorgesehen und vorzugsweise in ein Gehäuse des Ölabscheiders integriert, womit der Ölabscheider ein Modul darstellt, das mit geringem Aufwand im vorgesehenen Bauraum des Strahltriebwerkes montierbar ist. Bei einer hierzu alternativen Ausführungsform ist der Umlenkbereich und/oder die Zentrifuge im Bereich einer Vorkammer vorgesehen, womit bereits bekannte Strahltriebwerke mit geringem konstruktiven Aufwand im erfindungsgemäßen Umfang ausführbar sind, da die Vorkammer auf einfache Art und Weise dem Ölabscheider im Strömungsweg des Luft-Öl-Volumenstromes vorschaltbar ist.

Bei weiteren vorteilhaften Ausführungsformen des erfindungsgemäßen Strahltriebwerks ist die Einrichtung zum Einsprühen von Öl in den Luft-Öl-Volumenstrom zur Einstellung einer gewünscht hohen Abscheideleistung von Öl aus dem Luft-Öl-Volumenstrom stromauf und/oder stromab des Umlenkbereiches und/oder stromauf und/oder stromab der Zentrifuge vorgesehen.

Dabei ist bei einer Anordnung der Einrichtung zum Einsprühen von Öl in den Luft-Öl-Volumenstrom jeweils stromauf des Umlenkbereiches und der Zentrifuge eine Abscheideleistung bereits im Bereich des Umlenkbereiches und der Zentrifuge durch entsprechendes Vergrößern der Tröpfchengröße des im Luft-Öl-Volumenstrom vorhandenen Öles verbesserbar. Des Weiteren ist eine Abscheideleistung insbesondere im porösen Bereich des Ölabscheiders bei einer Anordnung der Einrichtung zum Einsprühen von Öl in den Luft-Öl-Volumenstrom stromab des Umlenkbereiches sowie stromab der Zentrifuge durch die wiederum erhöhte Tröpfchengröße weiter steigerbar. Die Abscheideleistung ist dann verbessert, wenn die Tröpfchengrößen von Ölpartikeln im Luft-Öl-Volumenstrom stromab des Umlenkbereichs und stromab der Zentrifuge, die aufgrund ihrer Größe im porösen Bereich des Ölabscheiders nicht abscheidbar sind, durch das Einsprühen von Öl über die Einrichtung in den Luft-Öl-Volumenstrom eine im porösen Bereich einfach abscheidbare Partikelgröße annehmen.

Sind die von den mit Öl beaufschlagten Bereichen in Richtung des Ölabscheiders führbaren Luft-Öl-Volumenströme zumindest teilweise vor Eintritt in den Ölabscheider zusammenführbar, ist die Abscheideleistung im Bereich des Ölabscheiders mit geringem Aufwand im Bereich der Einrichtung zum Einsprühen von Öl in die Luft-Öl-Volumenströme erhöhbar, da Öl vorzugsweise lediglich an einer Stelle in den Strömungsweg des dem Ölabscheider zugeführten Luft-Öl-Volumenstromes einzusprühen ist.

Ist ein mit Öl beaufschlagter Bereich eine Nebenaggregategetriebeeinrichtung, deren Innendruck im Betrieb auf Werte oberhalb einer Druckschwelle anhebbar ist, ist der Luft-Öl-Volumenstrom aus der Nebenaggregategetriebeeinrichtung mit geringem Aufwand in Richtung des Ölabscheiders führbar.

Bei weiteren vorteilhaften Ausführungsformen des erfindungsgemäßen Strahltriebwerkes ist oder sind der Ölabscheider und/oder die Vorkammer und/oder der Umlenkbereich und/oder die Zentrifuge wenigstens teilweise innerhalb und/oder außerhalb eines Gehäuses der Nebenaggregategetriebeeinrichtung angeordnet, wobei eine Anordnung der verschiedenen Baugruppen innerhalb des Gehäuses der Nebenaggregategetriebeeinrichtung einen zusätzlichen Schutz des Ölabscheiders, der Vorkammer, des Umlenkbereiches und/oder der Zentrifuge gegenüber Umwelteinflüssen darstellt, während eine Anordnung der besagten Baugruppen außerhalb des Gehäuses der Nebenaggregategetriebeeinrichtung konstruktive Änderungen im Bereich des Gehäuses der Nebenaggregategetriebeeinrichtung unter Umständen nicht erforderlich macht.

Ein mit Öl beaufschlagter Bereich ist bei weiteren vorteilhaften Ausführungsformen des erfindungsgemäßen Strahltriebwerkes eine Lagerkammer und/oder ein Öltank, womit aus diesen Bereichen durch einen Luftstrom ausgetragenes Öl in vorbeschriebenem Umfang mit hoher Abscheideleistung aus dem Luftstrom abscheidbar und mit geringem Aufwand in einen Ölkreislauf eines Strahltriebwerkes zurückführbar ist.

In Abhängigkeit des jeweils vorliegenden Anwendungsfalles besteht auch die Möglichkeit, den Ölabscheider des erfindungsgemäßen Strahltriebwerkes mit aus der DE 10 2006 058 343 A1 bekannten Mitteln zum Aufbringen elektrostatischer Kräfte auszuführen, um die Abscheideleistung des Ölabscheiders weiter zu verbessern.

Sowohl die in den Patentansprüchen angegebenen Merkmale als auch die in den nachfolgenden Ausführungsbeispielen des erfindungsgemäßen Strahltriebwerkes angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Strahltriebwerkes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Strahltriebwerkes mit einer im Bläsergehäuse angeordneten Nebenaggregategetriebeeinrichtung;
- Fig. 1b: eine Fig. 1 a entsprechende Darstellung eines Strahltriebwerkes mit im Bereich des Triebwerkskerns montierter Nebenaggregategetriebeeinrichtung;
- Fig. 2: eine stark schematisierte Teildarstellung des Strahltriebwerkes gemäß Fig. 1 a bzw. Fig. 1b mit im Bereich der Nebenaggregategetriebeeinrichtung angeordnetem Ölabscheider und zugeordneter Vorkammer, die in einem Gehäuse der Nebenaggregategetriebeeinrichtung vorgesehen ist;
- Fig. 3: eine Fig. 2 entsprechende Darstellung einer von Fig. 2 abweichenden Ausführungsform des Strahltriebwerkes gemäß Fig. 1a bzw. Fig. 1b mit außerhalb eines Gehäuses der Nebenaggregategetriebeeinrichtung angeordneter Vorkammer;
- Fig. 4: eine Fig. 2 entsprechende Darstellung einer weiteren Ausführungsform des Strahltriebwerkes gemäß Fig. 1a bzw. Fig. 1b mit stromauf des Ölabscheiders angeordneter Einrichtung zum Einsprühen von Öl in einen Luft-Öl-Volumenstrom; und
- Fig. 5: eine vergrößerte Darstellung eines in Fig. 4 näher gekennzeichneten Bereiches V.

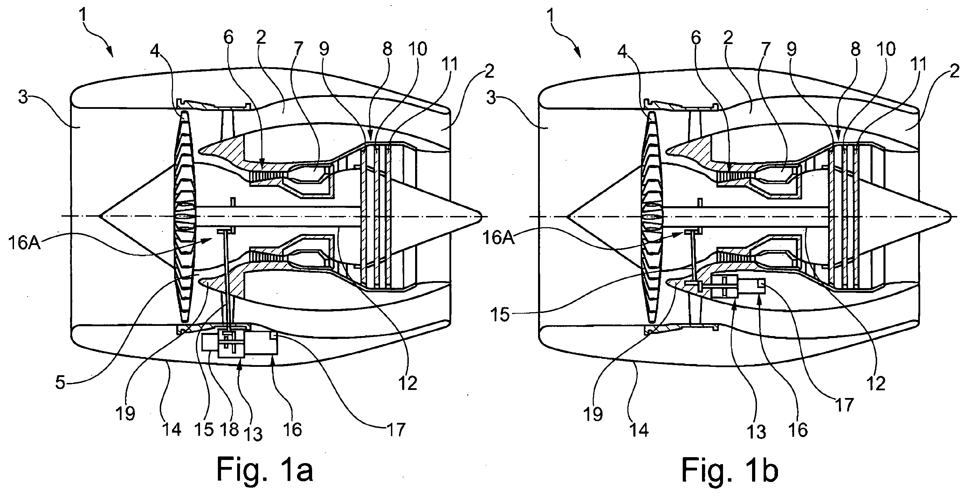

In Fig. 1 a und 1 b ist jeweils ein Strahltriebwerk 1 in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerksachse 12 verbunden sind.

Bei der Ausführung des Strahltriebwerks 1 gemäß Fig. 1 a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Strahltriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

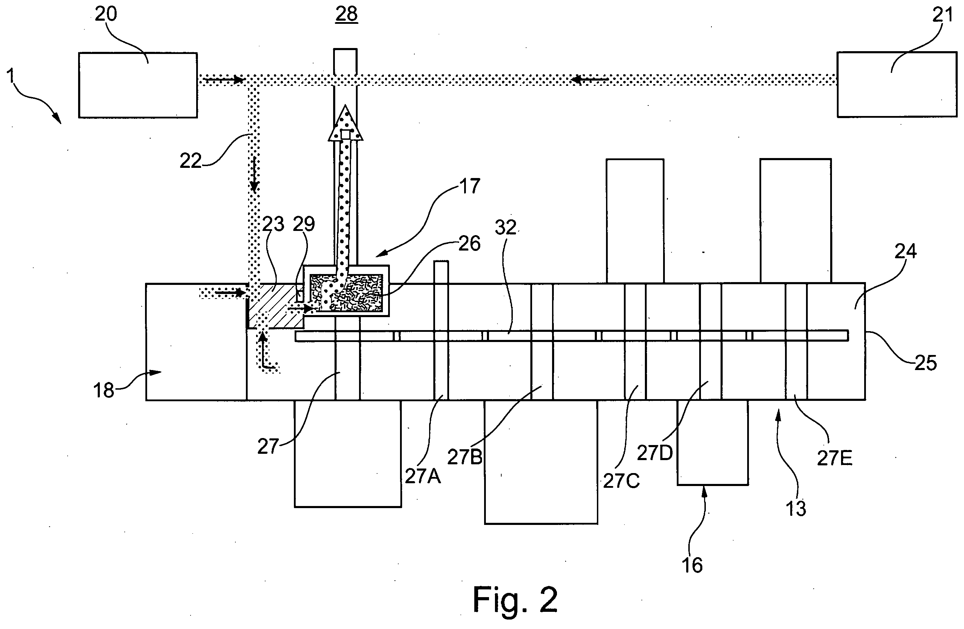

Fig. 2 bis Fig. 4 zeigen drei verschiedene Ausführungsformen des Strahltriebwerks 1 gemäß Fig. 1 a in stark schematisierter Form im Bereich der Nebenaggregategetriebeeinrichtung 13, der Nebenaggregate 16 und des Ölabscheiders 17, der vorliegend mit dem Öltank 18 und zwei weiteren Bereichen 20, 21 in Wirkverbindung steht, die vorliegend als Lagerkammern des Strahltriebwerks 1 ausgeführt sind und im Betrieb des Strahltriebwerks 1 mit Öl aus dem Öltank 18 zum Schmieren und Kühlen beaufschlagt werden. Dabei stellt der Bereich 20 die Lagerkammer des vorderen Lagers und der Bereich 21 die Lagerkammer des hinteren Lagers des Strahltriebwerkes 1 dar. Die zu Fig. 2 bis Fig. 4 näher beschriebenen Aspekte weist das Strahltriebwerk 1 gemäß Fig. 1 in im Wesentlichen identischen Umfang auf.

Bei der in Fig. 2 gezeigten Ausführungsform des Strahltriebwerks 1 sind jeweils ein Luft-Öl-Volumenstrom aus der vorderen Lagerkammer 20 und der hinteren Lagerkammer 21 in Richtung eines Leitungsbereiches 22 führbar, der vorliegend in eine dem Ölabscheider 17 vorgeschaltete Vorkammer 23 mündet. Des Weiteren ist auch der Öltank 18 vorliegend mit der Vorkammer 23 verbunden, um einen Luft-Öl-Volumenstrom aus dem Öltank 18 sowie die Luft-Öl-Volumenströme der Lagerkammern 20 und 21 über den Leitungsbereich 22 tangential in die Vorkammer einleiten zu können. Darüber hinaus ist auch ein Innenraum 24 eines Gehäuses 25 der Nebenaggregategetriebeeinrichtung 13 mit der Vorkammer 23 gekoppelt, wobei bei einer entsprechenden Bedruckung des Innenraums 24 ebenfalls ein Luft-Öl-Volumenstrom aus dem Gehäuse 25 der Nebenaggregategetriebeeinrichtung 13 tangential in die Vorkammer 23 eingeleitet wird. Die Vorkammer 23 ist mit dem Ölabscheider 17 verbunden, in dessen Innenraum ein poröser Bereich 26 drehbar angeordnet ist, der von dem aus der Vorkammer 23 ausströmenden Luft-Öl-Volumenstrom durchströmbar ist.

Der poröse Bereich 26 ist vorliegend über ein Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstromes soweit als möglich reduzieren zu können. Dabei wird der Ölanteil des Luft-Öl-Volumenstromes im Ölabscheider 17 im Bereich des porösen Bereiches 26 einerseits wie beim Durchströmen eines Prallfilters und andererseits wie im Bereich einer Zentrifuge durch die Rotation des porösen Bereiches 26 durch Abscheiden des Öls aus der Luft reduziert. Das im Bereich des porösen Bereiches 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in den Öltank 18 geführt. Der aus dem Ölabscheider 17 in Richtung der Umgebung 28 ausströmende Luftstrom weist nur eine geringe Beladung an Öl auf. Das Zahnrad 27 ist neben weiteren Zahnrädern 27A bis 27E drehfest mit einer Getriebewelle 32 verbunden und im Innenraum 24 der Nebenaggregategetriebeeinrichtung 13 angeordnet.

Um die Beladung des in Richtung der Umgebung 28 abströmenden Luftvolumenstromes mit Öl möglichst gering einstellen zu können, ist vorliegend im Bereich des Übergangs zwischen der Vorkammer 23 und dem Ölabscheider 17 eine Einrichtung 29 vorgesehen, mittels der Öl in den von der Vorkammer 23 in Richtung des Ölabscheiders 17 strömenden Luft-Öl-Völumenstrom mit definierter Tröpfchengröße eingesprüht wird. Hierfür ist die Einrichtung 29 mit einer Öldüse ausgeführt. Die Öldüse ist derart konfiguriert, dass beim Einsprühen von Öl in den in Richtung des Ölabscheiders 17 strömenden Luft-Öl-Volumenstrom Öltropfen entstehen, die größtenteils größer sind als Öltropfen, die aufgrund ihrer geringen Größe im porösen Bereich 26 nicht ausfilterbar sind.

Wiederum stromauf der Einrichtung 29 ist im Bereich der Vorkammer 23 ein Umlenkbereich für die über den Leitungsbereich 22, aus dem Innenraum 24 und aus dem Öltank 18 in die Vorkammer 23 geleiteten Luft-Öl-Volumenströme vorgesehen, in dessen Bereich zumindest ein Teil des Öls aus den Luft-Öl-Volumenströmen der Lagerkammern 20 und 21, des Innenraumes 24 und des Öltanks 18 aufgrund der im Umlenkbereich wirkenden Zentrifugalkraft abgeschieden wird. Damit wird bereits im Umlenkbereich der Vorkammer 23 die Beladung des Luft-Öl-Volumenstromes durch Ausfiltern größerer Tröpfchen reduziert, die eine größere Trägheit als Ölpartikel mit kleineren Durchmessern aufweisen.

Anschließend werden die noch im Luft-Öl-Volumenstrom, der in Richtung des Ölabscheiders 17 aus der Vorkammer 23 ausströmt, vorhandenen kleineren Tröpfchen durch das Einsprühen von Öl über die Einrichtung 29 vergrößert, was durch die jeweils vorliegenden Anziehungskräfte zwischen den einzelnen Öltröpfchen begünstigt wird. Durchströmt der mit Öl angereicherte Luft-Öl-Volumenstrom den Ölabscheider 17 und dessen porösen Bereich 26, der im Betrieb des Strahltriebwerks 1 entsprechend rotiert, wird ein weiterer wesentlicher Anteil des im Luft-Öl-Volumenstrom vorhandenen Öls abgeschleudert und anschließend aus dem Ölabscheider 17 in Richtung des Öltanks 18 abgesaugt. Die durch die Auswaschung des Öls nunmehr vergrößerten Ölpartikel können durch das Einspritzen von Öl von dem Metallschaum 26 im Breather 17 wesentlich effizienter separiert werden, womit Ölverluste des Strahltriebwerks 1 durch verringerte Emissionen in Richtung der Umgebung 28 minimiert sind.

Alternativ zu der vorstehenden Beschreibung besteht auch die Möglichkeit, dass die Einrichtung 29 stromauf des als Zentrifuge wirkenden Umlenkbereiches der Vorkammer 23 angeordnet ist und die sich im Luft-Öl-Volumenstrom stromab der Einrichtung 29 aufgrund der Vereinigung der Öltröpfchen bildenden größeren Tropfen im Umlenkbereich der Vorkammer 23 aufgrund der wirkenden Zentrifugalkraft abgeschieden werden. Anschließend erfolgt der weitere vorbeschriebene Abscheideprozess im rotierenden porösen Bereich 26 des Ölabscheiders 17, bevor die aus dem Ölabscheider 17 ausströmende Luft mit nur geringer Beladung an Öl in Richtung der Umgebung 28 ausströmt.

Bei der Ausführung gemäß Fig. 2 ist die Vorkammer 23 vollständig in das Gehäuse 25 der Nebenaggregategetriebeeinrichtung 13 integriert, während der Ölabscheider 17 zumindest bereichsweise in den Innenraum 24 der Nebenaggregategetriebeeinrichtung 13 eingreift.

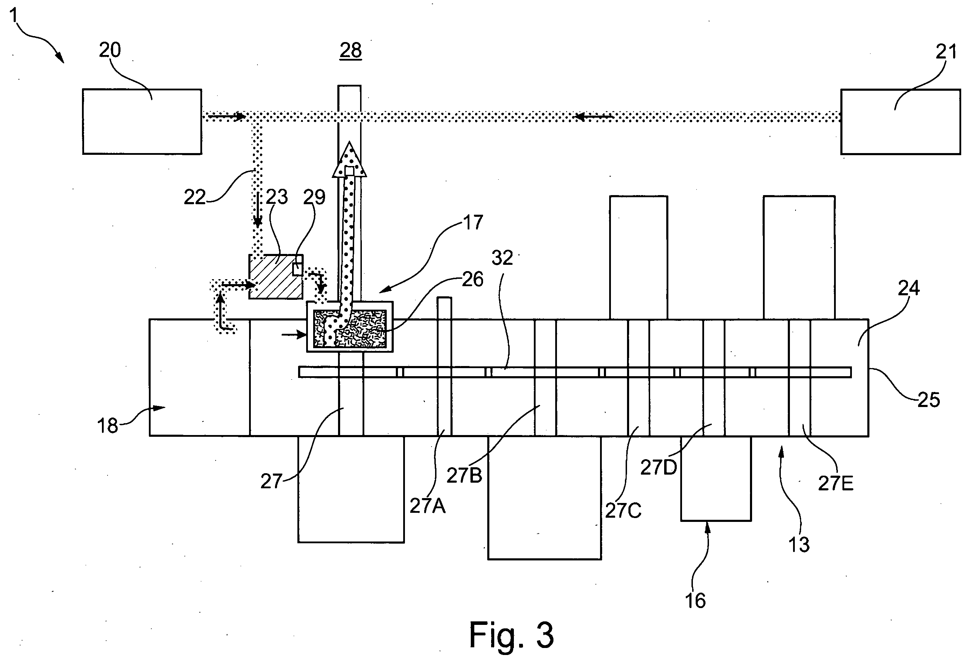

Im Unterschied hierzu ist die Vorkammer 23 bei der Ausführung des Strahltriebwerks 1 gemäß Fig. 3 vollständig außerhalb des Gehäuses der Nebenaggregategetriebeeinrichtung 13 angeordnet, während der Ölabscheider 17 im gleichen Umfang wie bei der Ausführung des Strahltriebwerks 1 gemäß Fig. 2 bereichsweise im Gehäuse 25 angeordnet ist. Wie bei der Ausführung des Strahltriebwerks 1 gemäß Fig. 2 werden auch bei dem Strahltriebwerk 1 gemäß Fig. 3 die Luft-Öl-Volumenströme aus den Lagerkammern 20 und 21, dem Öltank 18 und dem Innenraum 24 der Nebenaggregategetriebeeinrichtung 13 zunächst tangential in die Vorkammer 23 eingeleitet und über den Umlenkbereich in Richtung der Einrichtung 29 weitergeführt, in deren Bereich wiederum Öl in den gesammelten Luft-Öl-Volumenstrom eingesprüht wird. Anschließend wird der mit Öl angereicherte Luft-Öl-Volumenstrom in den Ölabscheider 17 eingeleitet und durchströmt dort den porösen Bereich 26.

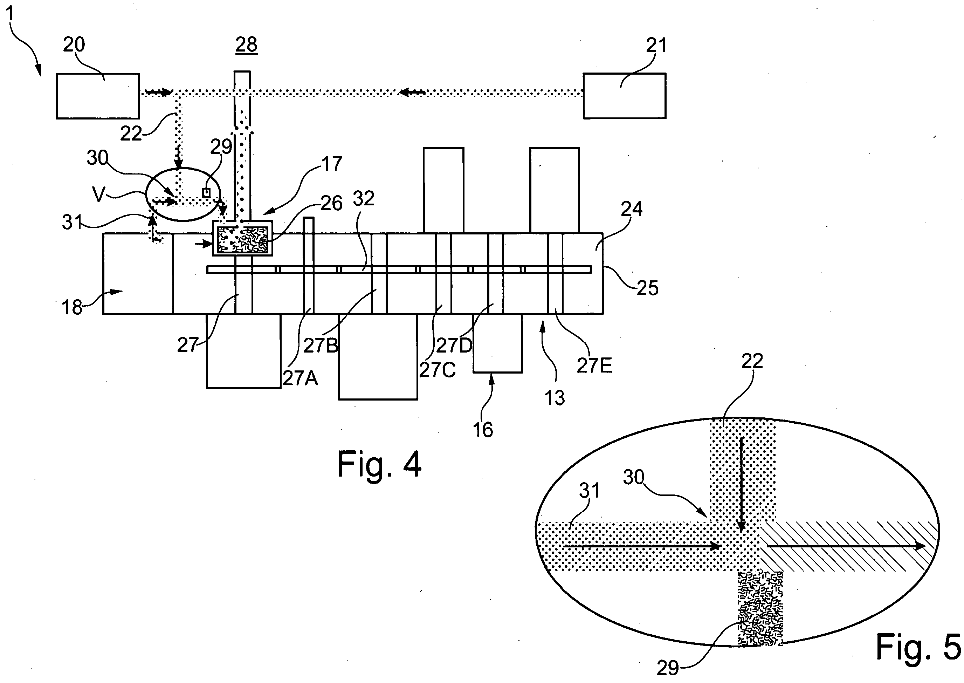

Die Ausführung des Strahltriebwerks 1 gemäß Fig. 4 ist im Unterschied hierzu ohne die Vorkammer 23 ausgeführt und kann unter anderem Anwendung finden für ein Strahltriebwerk, deren Öltank nicht in die Nebenaggregategetriebeeinrichtung 13 integriert ist und vorzugsweise in einem zu der Nebenaggregategetriebeeinrichtung 13 beabstandeten Bauraum innerhalb des Strahltriebwerks angeordnet ist. Die im Bereich der Lagerkammern 20 und 21 sowie im Bereich des Öltanks 18 mit Öl angereicherten Luft-Öl-Volumenströme werden stromab eines Leitungsbereichsknotens 30, in dessen Bereich der Leitungsbereich 22 und ein weiterer mit dem Öltank 18 verbundener Leitungsbereich 31 münden, in den Umlenkbereich eingeleitet, in dessen Bereich ein Teil des Öls aus dem vereinten Luft-Öl-Volumenstrom abgeschieden wird. Wiederum stromab der Umlenkeinrichtung wird wie in Fig. 5 stark schematisiert dargestellt, über die Einrichtung 29 Öl in den vom Leitungsbereichsknoten 30 abströmenden Luft-Öl-Volumenstrom eingesprüht. Der gewaschene Luft-Öl-Volumenstrom strömt mit größeren Öltropfen in den Ölabscheider 17 ein, in dem das Öl in der vorbeschriebenen Art und Weise im Bereich des rotierenden porösen Bereiches 26 abgeschieden wird. Zusätzlich wird der Luft-Öl-Volumenstrom aus dem Innenraum 24 der Nebenaggregategetriebeeinrichtung 13 direkt in den Ölabscheider 17 tangential eingeleitet, um auch die aus dem bedruckten Gehäuse 25 ausströmende und mit Öl beladene Verbrauchsluft im Bereich des Ölabscheiders 17 in gewünschtem Umfang zu reinigen.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Öltank
- 19: Bauteil
- 20: Bereich, vordere Lagerkammer
- 21: Bereich, hintere Lagerkammer
- 22: Leitungsbereich
- 23: Vorkammer
- 24: Innenraum
- 25: Gehäuse
- 26: poröser Bereich
- 27: Zahnrad
- 27A bis 27E: Zahnrad
- 28: Umgebung
- 29: Einrichtung
- 30: Leitungsbereichsknoten
- 31: weiterer Leitungsbereich
- 32: Getriebewelle

## Patentansprüche

1. Strahltriebwerk (1) mit wenigstens einem Ölabscheider (17), durch den ein Luft-Öl-Volumenstrom aus mehreren mit Öl beaufschlagten Bereichen (18, 20, 21, 24) zum Abscheiden von Öl führbar ist, wobei eine Einrichtung (29) zum Einsprühen von Öl in zumindest einen Luft-Öl-Volumenstrom vorgesehen ist, **dadurch gekennzeichnet, dass** mehrere mit Öl beaufschlagte Bereiche (18, 20, 21, 24) mit dem Ölabscheider (17) in Wirkverbindung stehen, wobei über die Einrichtung (29) im Bereich jeder Verbindung zwischen einem mit Öl beaufschlagten Bereich und dem Ölabscheider und/oder stromab eines Vereinigungsbereichs (30) zwischen wenigstens zwei Luft-Öl-Volumenströmen von zwei oder mehreren mit Öl beaufschlagten Bereichen (18, 20, 21) Öl einsprühbar ist.

2. Strahltriebwerk nach Anspruch 1, **dadurch gekennzeichnet, dass** der Ölabscheider (17) mit einem in Rotation versetzbaren porösen Bereich (26) ausgeführt ist, der im Strömungsweg des Luft-Öl-Volumenstromes angeordnet und von dem Luft-Öl-Volumenstrom durchströmbar ist.

3. Strahltriebwerk nach Anspruch 2, **dadurch gekennzeichnet, dass** die Einrichtung (29) zum Einsprühen von Öl in den Luft-Öl-Volumenstrom stromauf des porösen Bereiches (26) vorgesehen ist.

4. Strahltriebwerk nach einem der Ansprüche 2 oder 3, **dadurch gekennzeichnet, dass** vorzugsweise stromauf des porösen Bereiches (26) des Ölabscheiders (17) zumindest ein Umlenkbereich im Strömungsweg des Luft-Öl-Volumenstromes vorgesehen ist, in dessen Bereich zumindest ein Teil des Öls aus dem Luft-Öl-Volumenstrom aufgrund der wirkenden Zentrifugalkraft abscheidbar ist.

5. Strahltriebwerk nach einem der Ansprüche 2 bis 4, **dadurch gekennzeichnet, dass** vorzugsweise stromauf des porösen Bereiches (26) des Ölabscheiders (17) zumindest eine Zentrifuge im Strömungsweg des Luft-Öl-Volumenstromes vorgesehen ist, in dessen Bereich zumindest ein Teil des Öls aus dem Luft-Öl-Volumenstrom aufgrund der wirkenden Zentrifugalkraft abscheidbar ist.

6. Strahltriebwerk nach Anspruch 4 oder 5, **dadurch gekennzeichnet, dass** der Umlenkbereich und/oder die Zentrifuge im Bereich des Ölabscheiders vorgesehen ist.

7. Strahltriebwerk nach einem der Ansprüche 4 bis 6, **dadurch gekennzeichnet, dass** der Umlenkbereich und/oder die Zentrifuge im Bereich einer Vorkammer vorgese-, hen ist.

8. Strahltriebwerk nach einem der Ansprüche 4 bis 7, **dadurch gekennzeichnet, dass** die Einrichtung (29) zum Einsprühen von Öl in den Luft-Öl-Volumenstrom stromauf und/oder stromab des Umlenkbereiches und/oder stromauf und/oder stromab der Zentrifuge vorgesehen ist.

9. Strahltriebwerk nach einem der Ansprüche 1 bis 8, **dadurch gekennzeichnet, dass** die von den mit Öl beaufschlagten Bereichen (18, 20, 21, 24) in Richtung des Öl-abscheiders (17) führbaren Luft-Öl-Volumenströme zumindest teilweise vor Eintritt in den Ölabscheider (17) zusammenführbar sind.

10. Strahltriebwerk nach einem der Ansprüche 1 bis 9, **dadurch gekennzeichnet, dass** ein mit Öl beaufschlagter Bereich (24) eine Nebenaggregategetriebeeinrichtung (13) ist, deren Innendruck im Betrieb auf Werte oberhalb einer Druckschwelle anhebbar ist.

11. Strahltriebwerk nach Anspruch 10, **dadurch gekennzeichnet, dass** der Ölabscheider (17) und/oder die Vorkammer (23) und/oder der Umlenkbereich und/oder die Zentrifuge wenigstens teilweise innerhalb und/oder außerhalb eines Gehäuses (24) der Nebenaggregategetriebeeinrichtung (13) angeordnet ist oder sind.

12. Strahltriebwerk nach einem der Ansprüche 1 bis 11, **dadurch gekennzeichnet, dass** ein mit Öl beaufschlagter Bereich ein Öltank oder eine Lagerkammern ist.

## Claims

1. Jet engine (1), comprising at least one oil separator (17) through which an air-oil volume flow from multiple areas (18, 20, 21, 24) that are impinged by oil can be guided for the purpose of separating oil, wherein a device (29) for spray-injecting oil into at least one air-oil volume flow is provided **characterized in that** multiple areas (18, 20, 21, 24) that are impinged by oil are in operative connection with the oil separator (17), wherein oil can be spray-injected via the device (29) in the area of each connection between an area that is impinged by oil and the oil separator and/or downstream of a connection area (30) between at least two air-oil volume flows of two or more areas (18, 20, 21) that are impinged by oil.

2. Jet engine according to claim 1, **characterized in that** the oil separator (17) is embodied with a porous area (26) that can be set into rotation and that is arranged inside the flow path of the air-oil volume flow and through which an air-oil volume flow can flow.

3. Jet engine according to claim 2, **characterized in that** the device (29) for spray-injecting oil into the air-oil volume flow is provided upstream of the porous area (26).

4. Jet engine according to one of the claims 2 to 3, **characterized in that** at least one deflection area is provided inside the flow path of the air-oil volume flow preferably upstream of the porous area (26) of the oil separator (17), in the area of which at least a portion of the oil can be separated from the air-oil volume flow as a result of the acting centrifugal force.

5. Jet engine according to one of the claims 2 to 4, **characterized in that** at least one centrifuge is provided inside the flow path of the air-oil volume flow preferably upstream of the porous area (26) of the oil separator (17), in the area of which at least a portion of the oil can be separated from the air-oil volume flow as a result of the acting centrifugal force.

6. Jet engine according to claim 4 or 5, **characterized in that** the deflection area and/or the centrifuge is provided in the area of the oil separator.

7. Jet engine according to one of the claims 4 to 6, **characterized in that** the deflection area and/or the centrifuge is provided in the area of a prechamber.

8. Jet engine according to one of the claims 4 to 7, **characterized in that** the device (29) for spray-injecting oil into the air-oil volume flow is provided upstream and/or downstream of the deflection area and/or upstream and/or downstream of the centrifuge.

9. Jet engine according to one of the claims 1 to 8, **characterized in that** the air-oil volume flows which can be guided from the areas (18, 20, 21, 24) that are impinged by oil in the direction of the oil separator (17) can be merged at least in part before they enter the oil separator (17).

10. Jet engine according to one of the claims 1 to 9, **characterized in that** an area (24) that is impinged by oil is an auxiliary gearbox (13), with its internal pressure being raisable during operation up to values that are above a pressure threshold.

11. Jet engine according to claim 10, **characterized in that** the oil separator (17) and/or the prechamber (23) and/or the deflection area and/or the centrifuge is or are arranged at least in part inside and/or outside of a housing (24) of the auxiliary gearbox (13).

12. Jet engine according to one of the claims 1 to 11, **characterized in that** an area that is impinged by oil is an oil tank or a bearing chamber.

## Revendications

1. Moteur à réaction (1) comprenant au moins un déshuileur (17) à travers lequel peut être guidé pour séparer de l'huile un flux volumique air-huile provenant de plusieurs zones (18, 20, 21, 24) alimentées en huile, sachant qu'est prévu un dispositif (29) destiné à vaporiser de l'huile dans au moins un flux volumique air-huile, **caractérisé en ce que** plusieurs zones (18, 20, 21, 24) alimentées en huile sont en liaison active avec le déshuileur (17), sachant qu'au moyen du dispositif (29), de l'huile peut être vaporisée dans la zone de chaque liaison entre une zone alimentée en huile et le déshuileur et/ ou en aval d'une zone de jonction (30) entre au moins deux flux volumiques air-huile de deux ou plusieurs zones (18, 20, 21) alimentées en huile.

2. Moteur à réaction selon la revendication n° 1, **caractérisé en ce que** le déshuileur (17) est conçu avec une partie poreuse (26) mobile en rotation qui est placée dans la voie d'écoulement du flux volumique air-huile et peut être traversée par le flux volumique air-huile.

3. Moteur à réaction selon la revendication n° 2, **caractérisé en ce que** le dispositif (29) destiné à vaporiser de l'huile dans le flux volumique air-huile est prévu en amont de la partie poreuse (26).

4. Moteur à réaction selon une des revendications n° 2 ou n° 3, **caractérisé en ce que** - de préférence en amont de la partie poreuse (26) du déshuileur (17) - est prévue dans la voie d'écoulement du flux volumique air-huile au moins une zone de déviation, dans laquelle au moins une partie de l'huile du flux volumique air-huile peut être séparée sous l'effet de la force centrifuge.

5. Moteur à réaction selon une des revendications n° 2 à n° 4, **caractérisé en ce que** - de préférence en amont de la partie poreuse (26) du déshuileur (17) - est prévue dans la voie d'écoulement du flux volumique air-huile au moins une centrifugeuse, dans la zone de laquelle au moins une partie de l'huile du flux volumique air-huile peut être séparée sous l'effet de la force centrifuge.

6. Moteur à réaction selon la revendication n° 4 ou n° 5, **caractérisé en ce que** la zone de déviation et/ ou la centrifugeuse est/ sont prévue(s) dans la zone du déshuileur.

7. Moteur à réaction selon une des revendications n° 4 à n° 6, **caractérisé en ce que** la zone de déviation et/ ou la centrifugeuse est/ sont prévue(s) dans la zone d'une préchambre.

8. Moteur à réaction selon une des revendications n° 4 à n° 7, **caractérisé en ce que** le dispositif (29) destiné à vaporiser de l'huile dans le flux volumique air-huile est prévu en amont et/ ou en aval de la zone de déviation et/ ou en amont et/ ou en aval de la centrifugeuse.

9. Moteur à réaction selon une des revendications n° 1 à n° 8, **caractérisé en ce que** les flux volumiques air-huile pouvant être guidés depuis les zones (18, 20, 21, 24) alimentées en huile en direction du déshuileur (17) peuvent être réunis au moins partiellement avant l'entrée dans le déshuileur (17).

10. Moteur à réaction selon une des revendications n° 1 à n° 9, **caractérisé en ce qu'**une zone alimentée en huile (24) est un boîtier d'accessoires (13) dont la pression interne en fonctionnement peut être augmentée à des valeurs au-dessus d'un seuil de pression.

11. Moteur à réaction selon la revendication n° 10, **caractérisé en ce que** le déshuileur (17) et/ ou la préchambre (23) et/ ou la zone de déviation et/ ou la centrifugeuse est/ sont au moins partiellement disposé(e)(s) à l'intérieur et/ ou à l'extérieur d'un carter (24) du boîtier d'accessoires (13).

12. Moteur à réaction selon une des revendications n° 1 à n°11, **caractérisé en ce qu'**une zone alimentée en huile est un réservoir d'huile ou une chambre de palier.
